# EUROPEAN PATENT SPECIFICATION

(11) **EP 3 047 755 B1**
(45) Date of publication and mention of the grant of the patent: **09.05.2018**
(21) Application number: 16152137.2
(22) Date of filing: 20.01.2016
(51) Int. Cl.: A47C 1/027, A47C 1/14, B60N 2/22

(54) **CONNECTION JOINT**
ANSCHLUSSVERBINDUNGSSTÜCK
JOINT DE RACCORDEMENT

(30) Priority: 23.01.2015 IT BS20150008
(43) Date of publication of application: 27.07.2016
(73) Proprietor: SCASSA G. & F. DI SCASSA FABRIZIO & C. S.n.c., 46041 Asola (Mantova) (IT)
(72) Inventor: SCASSA, Gianfranco, I-46041 Asola, Mantova (IT); SCASSA, Fabrizio, I-46041 Asola, Mantova (IT)
(74) Representative: Chimini, Francesco

(56) References cited:
- WO-A1-2014/009642
- FR-A- 1 244 382
- US-A- 2 410 088
- US-A1- 2011 304 188

## Description

The present invention relates to a connection joint between two frames of a structure, in particular to adjust the angle of one frame in relation to the other. The joint according to the invention is advantageously applicable to a sun lounger, deckchair or the like, to adjust the angle of the backrest.

Joints suitable for adjusting the inclination of the backrest of a lounger or seat are already known of. Said joints connect the main frame of the lounger or seat to the backrest frame, allowing a selection of one of many possible backrest positions, such as between a horizontal backrest position, a vertical backrest position and one or more intermediate positions.

Some of these joints also perform a support function of the backrest, i.e. lend a stability to the chosen position such as not to require the use of other means of support of the backrest on the ground or on the main frame.

In these cases, the joint is complex to produce and /or consists of a large number of components, such as to influence, as well as production costs, the solidity, dimensions and aesthetic appearance of the structure which the joint is applied to. An hinge joint for frame structures is disclosed for example in US 2410088 A.

The purpose of the present invention is to propose a joint, particularly, but not exclusively, for a sun lounger, seat and the like, which allows an adjustment of the position of one frame in relation to another and which at the same time does not suffer from the drawbacks mentioned above and is in particular very compact, of small dimensions, and therefore having little impact on the appearance of the structure to which it is applied.

Another purpose of the invention is to provide a joint for sun loungers, deck chairs and the like, particularly suitable for use in the open air inasmuch as resistant to the action of external agents, such as water, salt, dust.

Such purposes are achieved by a joint according to claim 1 and a sun lounger, deck chair or the like according to claim 12. The dependent claims describe preferred or advantageous embodiments of the joint and of the sun lounger.

The features and advantages of the invention will, in any case, be evident from the description given below of its preferred embodiments, made by way of a nonlimiting example with reference to the appended drawings, wherein:

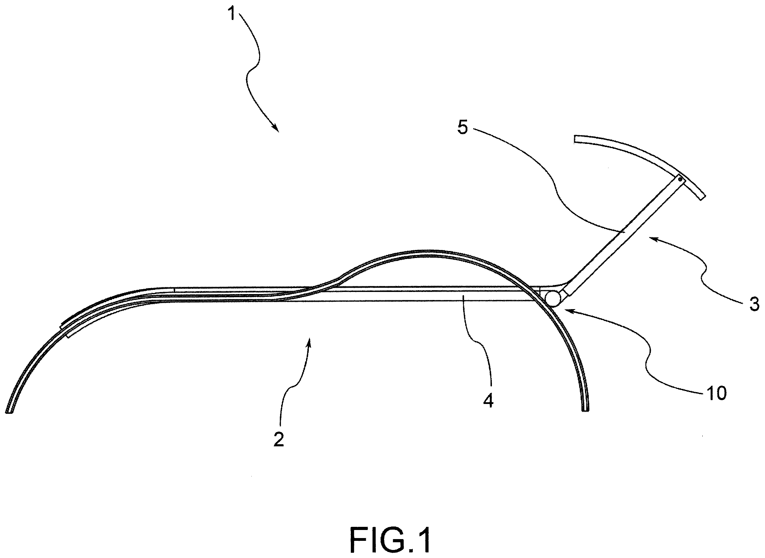

- Figure 1 is a side view of a sun lounger with joints according to the invention;

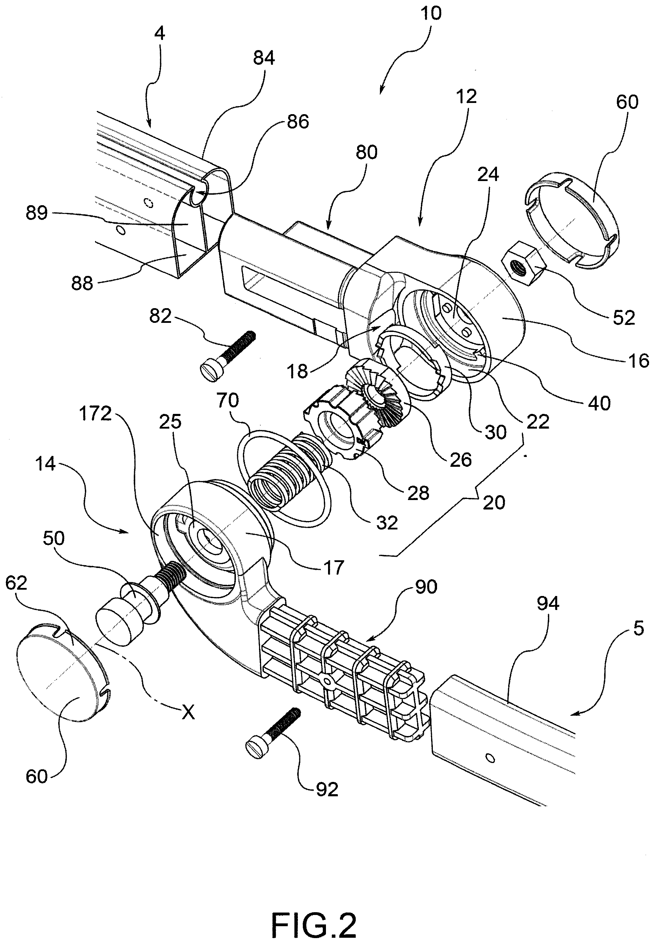

- Figure 2 is an exploded perspective view of a joint according to the invention;

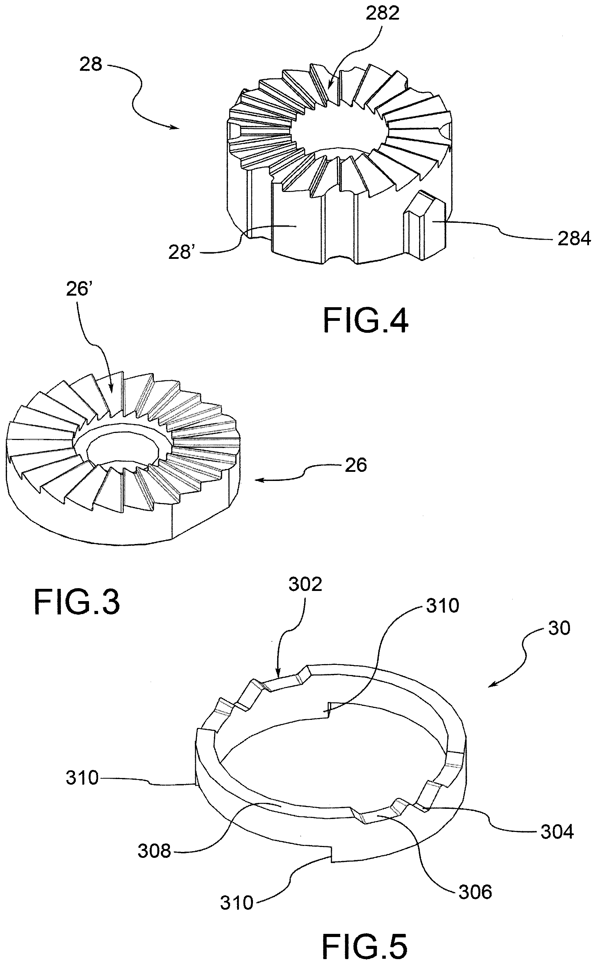

- Figure 3 is a perspective view of the fixed crown gear of the adjustment mechanism of the joint;
- Figure 4 is a perspective view of the mobile ring nut of the adjustment mechanism;
- Figure 5 is a perspective view of the spacer ring of the adjustment mechanism;
- Figure 6 shows the joint in one of the possible locking positions of the backrest, in which the mobile ring nut engages the fixed crown gear;
- Figure 6a is a cross-section of the joint along the line A-A in figure 6;
- Figure 7 shows the joint in a starting position before the resetting of the adjustment mechanism;
- Figure 7a is a cross-section of the joint along the line A-A in figure 7;
- Figure 8 shows the joint in a position of maximum folding of the backrest onto the main frame of the sun lounger;
- Figure 8a is a cross-section of the joint along the line A-A in figure 8;
- Figure 9 shows, in perspective view, the interaction between the mobile ring nut and the spacer ring in the position of the joint corresponding to figures 6 and 6a;
- Figure 10 shows, in perspective view, the interaction between the mobile ring nut and the spacer ring in the position of the joint corresponding to figures 7 and 7a;
- Figure 11 shows, in perspective view, the interaction between the mobile ring nut and the spacer ring in the position of the joint corresponding to figures 8 and 8a;and
- Figure 12 is a cross-section of the fixed part of the joint, which is suitable for connection to the main frame of the sun lounger.

The description that follows refers to the application of a joint according to the invention to a sun lounger to adjust the inclination of the backrest. As mentioned above, the joint can be applied to any structure to adjust the angular position of one frame in relation to another.

In the drawings, reference numeral 1 globally denotes a sun lounger. The sun lounger 1 comprises a main part 2 and a backrest 3. The main part 2 is supported by a main frame 4; the backrest is supported by a backrest frame 5. For example, the main frame 4 and 5 backrest frame support a canvas.

The backrest frame 5 and the main frame 4 are connected to each other by a pair of joints 10. These joints 10 are suitable to allow the adjustment of the inclination of the backrest 3 and, advantageously, also perform the function of supporting said backrest. In other words, once the user has chosen the desired inclination, the joints 10 provide the stability needed to support the backrest during use of the lounger, without requiring additional means of support on the ground or on the main frame 4.

One of the two joints 10, such as the joint on the right side of the lounger will now be described. Since the two joints are structurally specular, the left joint will not be described.

The joint 10 comprises a fixed part 12, hereinafter called fixed half-joint 12, i.e. suitable to be connected to the main frame 4 of the sun lounger, and a mobile part 14, hereinafter called mobile half-joint 14, i.e. suitable to be connected to the frame of the backrest 5.

The fixed half-joint 12 and the mobile half-joint 14 have respective mutual coupling portions 16, 17. These coupling portions 16, 17 jointly delimit a joint seat 18 in which an adjustment mechanism 20 of the angular position of the mobile half-joint 14 in relation to the fixed half-joint 12 is housed.

Consequently, the two coupling portions 16, 17, when placed alongside each other, form a sort of casing, for example substantially cylindrical in shape, for the adjustment mechanism 20.

For example, the joint seat 18 is delimited by a side wall 22, preferably of a substantially cylindrical shape, and, at the opposite ends, by two bottom walls 24, 25.

The joint seat 18 and the components of the adjustment mechanism 20 described below extend around the rotation axis X of the joint. Therefore, in the rest of the description, the term "axial" shall be taken to mean a position or a movement along the rotation axis X.

In a general embodiment, the adjustment mechanism 20 comprises a fixed crown gear 26, integral with the coupling portion 16 of the fixed half-joint 12, a mobile ring nut 28, integral in rotation with the mobile half-joint 14 and suitable to engage the fixed crown gear 26 in steps, a spacer ring 30, substantially suitable to define different axial positions of the mobile ring nut 28, and elastic ring-nut stressing means which elastically influence the axial position of the mobile ring nut 28, as described below.

The fixed crown gear 26 has a toothing 26' axially facing the mobile half-joint 14. In some embodiments, the teeth of the toothing 26' have a triangular-rectangle cross section, so as to allow a sliding movement in steps of a counter-gear 282 (of the mobile ring nut 28) in one direction (forward rotation of the backrest 3) and a stable locking of the mobile ring 28 to the fixed crown gear 26 if the counter-gear 282 is turned in the opposite direction.

The mobile ring nut 28, integral in rotation with the mobile half-joint 14, is provided on a face thereof facing the fixed crown gear 26, with an annular counter-gear 282 suitable to engage the fixed crown gear 26 in steps so as to identify a plurality of angular shaped coupling positions between said mobile ring nut 28 and said fixed crown gear 26.

The spacer ring 30 is located, with the possibility of rotation around the fixed crown gear 26. The spacer ring has, on the side facing the mobile ring nut 28, a cam profile 302 on which the mobile ring nut 28 engages. In one embodiment, three engagement portions with the mobile ring are made on the cam profile 302. In the first engagement portion, the mobile ring nut, when rotated in one direction, engages the fixed crown gear 26 in steps and simultaneously drags the spacer ring 30 in rotation around the fixed crown gear 26.

In the second engagement portion, the mobile ring nut 28 is in an axially rearward position of the first position, so as to be disengaged from the fixed crown gear 26. When rotated in one direction, the mobile ring nut 28 continues however to drag the spacer ring 30 in rotation around the fixed crown gear 26.

In the third engagement portion, the mobile ring 28 is located in an even more rearward position, is disengaged from the fixed crown gear 26 and is free to rotate relative to the spacer ring 30.

The spacer ring 30 and the fixed half-joint 12 are provided with stop means suitable to block the rotation of the spacer ring 30 induced by the rotation of the mobile ring-nut 28, in two end stroke positions of the backrest, as described further below. When the spacer ring 30 locks into one of these end-stroke positions, the mobile ring nut 28 can move from the position of engagement with the first engagement portion to the position of engagement at least with the second engagement portion, with the spacer ring 30.

The elastic ring-nut stressing means 32 act axially on the mobile ring nut 28 in the direction of engagement with the fixed crown gear 26 and are suitable to allow a controlled reversing of the mobile ring nut 28 for the stepped rotation on the fixed crown gear 26 and for the passage of the mobile ring nut from the first to the second and from the second to the third engagement position with the spacer ring 30.

In some preferred embodiments, the joint 10 is provided with sealing means suitable to prevent the entrance of external agents, such as water, salt and dust, in the joint seat.

In some embodiments, the first engagement portion of the spacer ring 30 is defined by at least a first groove 304 (preferably two, diametrically opposite each other) made in the side surface of the spacer ring 30, for example in the shape of a "V ". In some embodiments, the second engagement portion of the spacer ring is defined by at least a second groove 306 (preferably two, diametrically opposite each other) made in the side surface of the spacer ring, adjacent to the first groove 304. The first groove 302 has a depth greater than that of the second groove 304. In particular, as mentioned above, the depth of the first groove 302 is such as to allow the counter-gear 282 of the mobile ring nut to engage the toothing 26' of the fixed crown gear 26, while the depth of the second groove 306 is such as to cause the disengagement of the mobile ring nut 28 from the fixed crown gear 26.

In one embodiment, the mobile ring nut 28 is equipped with at least one radial ring nut tooth 284 (preferably two, diametrically opposite each other) which extends from the side surface of the mobile ring nut 28 and which is suitable to be inserted in the first and in the second groove 304, 306.

In certain embodiments, the third engagement portion is defined by at least one circular portion 308 (preferably two, diametrically opposite each other) of the spacer ring edge facing towards the mobile ring nut 28.

In some embodiments, from the inner surface of the joint seat 18, for example near the bottom wall 24 of the fixed half-joint 12 to which the fixed crown gear 26 is attached, at least one radial locking tooth 40 (preferably two, diametrically opposite each other)extends; in the edge of the spacer ring 30 opposite the mobile ring nut 28 at least two end stroke steps 310 (preferably four, diametrically opposite each other) are made, suitable to abut against the locking tooth 40 so as to define the two vertical and horizontal end stroke positions of the backrest, as described further below.

In some embodiments, the coupling portion of the mobile half-joint 14 and the mobile ring nut 28 have counter-shaped lateral contact surfaces 14 ', 28'. This way, the mobile ring nut 28 is integral in rotation with the mobile half-joint 14 without the need for reciprocal attachment of the two elements.

In some embodiments, the elastic ring nut stressing means 32 comprise a cylindrical or conical coil spring placed in compression between the mobile ring nut 28 and the bottom wall 25 of the joint seat made in the mobile half-joint 14.

In some embodiments, the two half-joints are connected to each other by a locking screw 50 which axially engages the two coupling portions 16, 17. For example, the locking screw 50 passes through the bottom walls of the joint seat and is screwed into a nut 52 housed in a respective nut seat 54, made for example in a projecting portion 242 of the bottom wall 24 of the joint seat made in the fixed half-joint 12, facing opposite the components of the adjustment mechanism 20.

In some embodiments, each coupling portion of the half-joint has a side wall 162, 172 which extends axially beyond the respective bottom wall 24, 25 of the joint seat and is provided with a protective cap 60 applied to said side wall 162, 172 to conceal the head 50' of the locking screw 50 on one side, and the nut 52 on the opposite side. The two coupling portions 16, 17 of the half-joints, when placed together, thus form a substantially cylindrical body, closed and extremely compact.

In some preferred embodiments, each protective cap 60 has a rim 62 suitable to flex elastically in the radial direction so as to enter the wall 162, 172 of the respective coupling portion with interference and snap lock in an undercut 64 made in said side wall. Such a coupling between the protective cap 60 and the side wall 162, 172 prevents the entrance through the plug of external agents such as water, dust, salt.

In some embodiments, moreover, an annular sealing gasket 70 is interposed between the coupling portions 16, 17.

For the connection to the main frame and to the backrest frame, the fixed and mobile half-joints 12, 14 have respective insertion portions 80, 90 suitable to be inserted and fixed, for example by means of joint attachment screws 82, 92, into a profiled element 84 of the main frame 4 and a profiled element 94 of the backrest frame 5, respectively.

In some embodiments, the coupling portions and the insertion portions of the joint, as well as the protection caps, are made by moulding in a plastic material. The components of the adjustment mechanism and the locking screw can be made of metal.

In one embodiment, for example, the fixed crown gear 26, made of metal, is attached to the bottom wall 24 of the respective coupling portion by overmoulding.

Returning to the connection between the joint and the main and backrest frames, as mentioned above in some embodiments, the main frame 4 comprises, for the connection to each joint, a profiled element 84 in which an insertion portion 80 of the joint is inserted with a shaped coupling. In some embodiments, in the upper portion of the side wall of said profiled element 84 a longitudinal groove 86 is made suitable to receive a support bar of a lounger canvas (not shown).

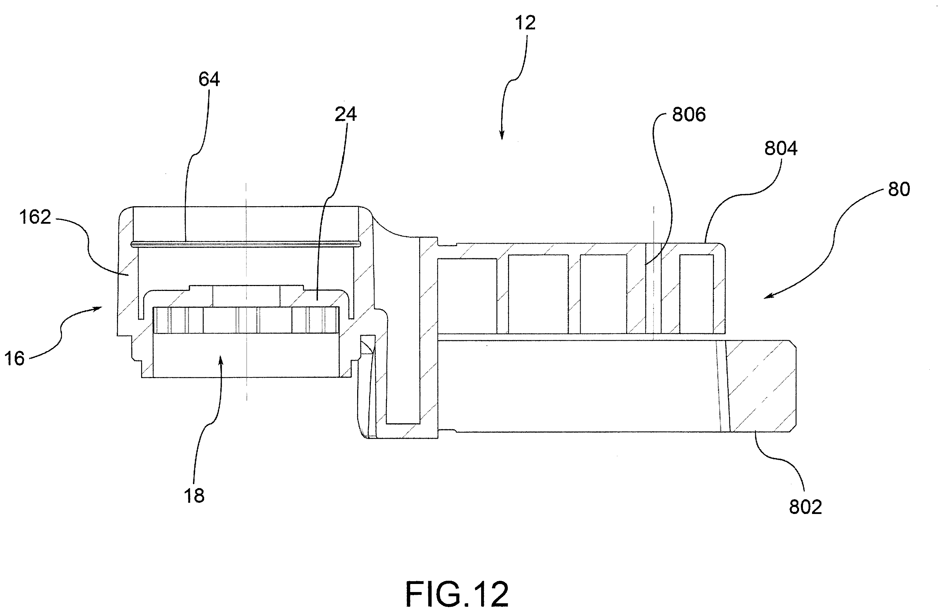

In one embodiment, the longitudinal groove 86 is connected to a bottom wall 88 of the profiled element 84 by means of an inner septum 89 dividing the inner cavity of the profiled element into two cavity parts. As highlighted in particular in Figure 12, the insertion portion 80 of the fixed half-joint 12 comprises a main insertion portion 802, inserted with a shaped coupling in one of said cavity parts of the profiled element 84, and a strengthening portion 804 extending from the coupling portion 16 and which is inserted in the other of said cavity parts. The strengthening portion 804 is parallel and separate from the main insertion portion 802, so as to allow the inner septum 89 to insert itself between the main insertion portion 802 and the strengthening portion 804.

It is to be noted that a hole 806 may be made in the strengthening portion 804 for screwing a joint attachment screw 82 to the respective profiled element 84.

The functioning of the joint is as follows.

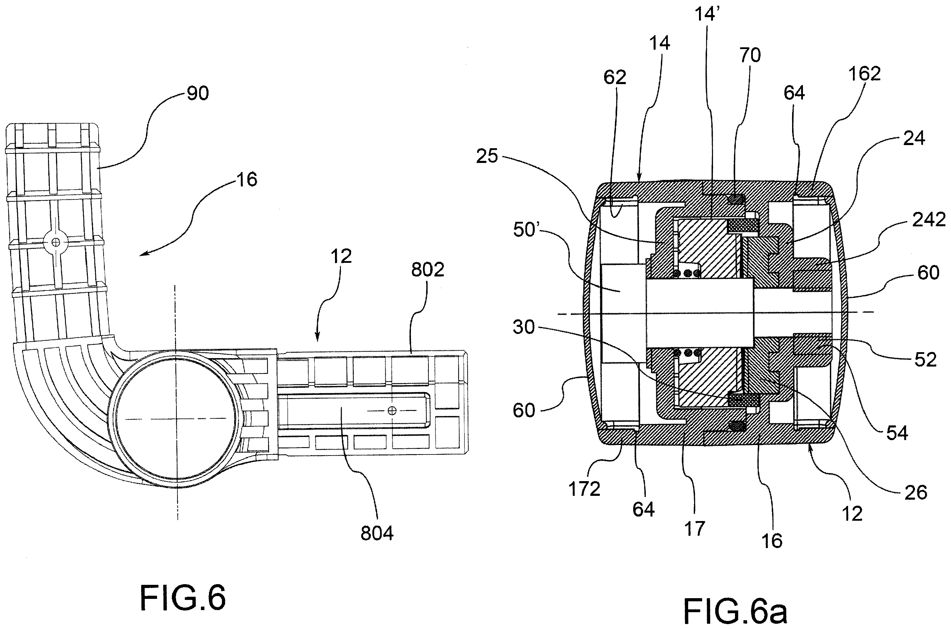

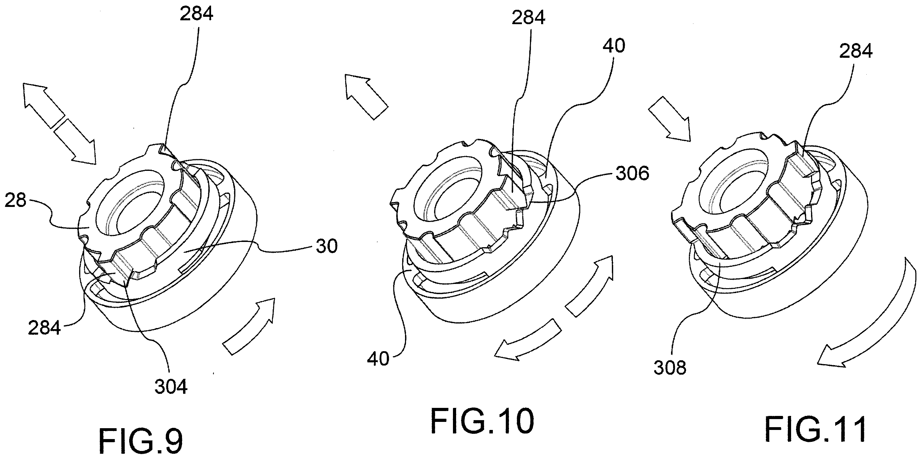

Consider the joint in the situation illustrated in figures 6, 6a and 9, in which the radial teeth 284 of the mobile ring nut 28 engage the first respective grooves 304 of the spacer ring 30. The fixed crown gear 26 engages the counter-gear 282 of the mobile ring nut 28, while the backrest is blocked in one of a plurality of possible positions. Rotating the backrest forward causes the stepped rotation of the mobile ring nut 28 on the fixed crown gear 26. In its rotation, the mobile ring nut also drags the spacer ring 30.

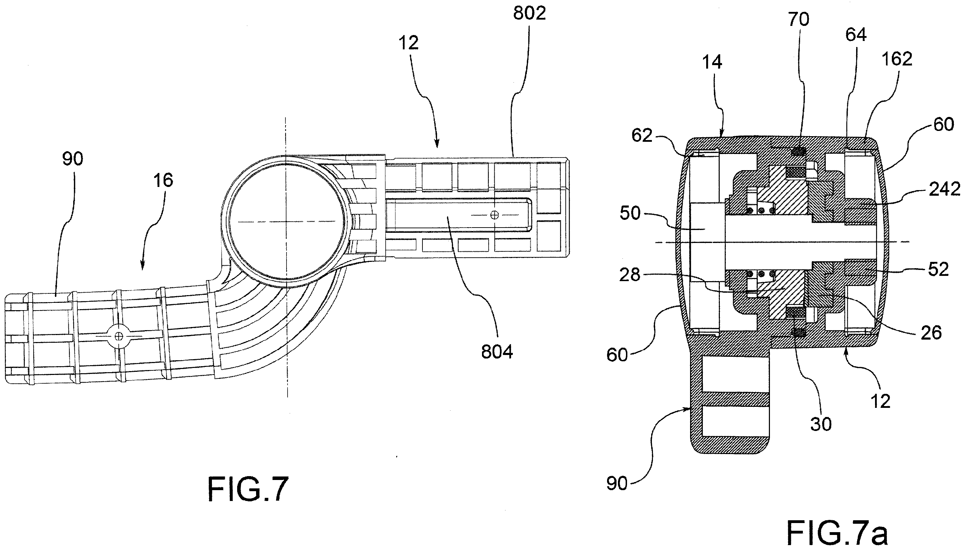

When the backrest reaches the last position of use, such as a vertical or substantially vertical end stroke position, the rotation of the spacer ring 30 is blocked by a radial stop tooth 40 made in the joint seat. A further forward movement of the backrest thus causes the rotation of the mobile ring nut 28 only, and thus the insertion of its radial teeth 284 in the second radial grooves 306 (figure 7, 7a and 10).

From this vertical end stroke position it is possible to return to the starting or initial adjustment position, such as a horizontal position of the backrest, from which it is possible to re-trigger the adjustment and locking mechanism of the backrest. Rotating the backrest, the mobile ring nut 28 rotates and with it the spacer ring 30. The mobile nut ring, however, is distanced from the fixed crown gear 26, so that the mobile half-joint can rotate freely backwards.

When the spacer ring 30 is stopped by the radial stop tooth 40, the backrest is in a horizontal or substantially horizontal end stroke position. A further movement backwards of the backrest triggers the radial teeth 284 of the mobile ring nut 28 in the first groove 304 of the spacer ring, thus lowering the mobile ring nut onto the fixed crown gear and thereby causing the rearming of the adjustment mechanism (Figure 9).

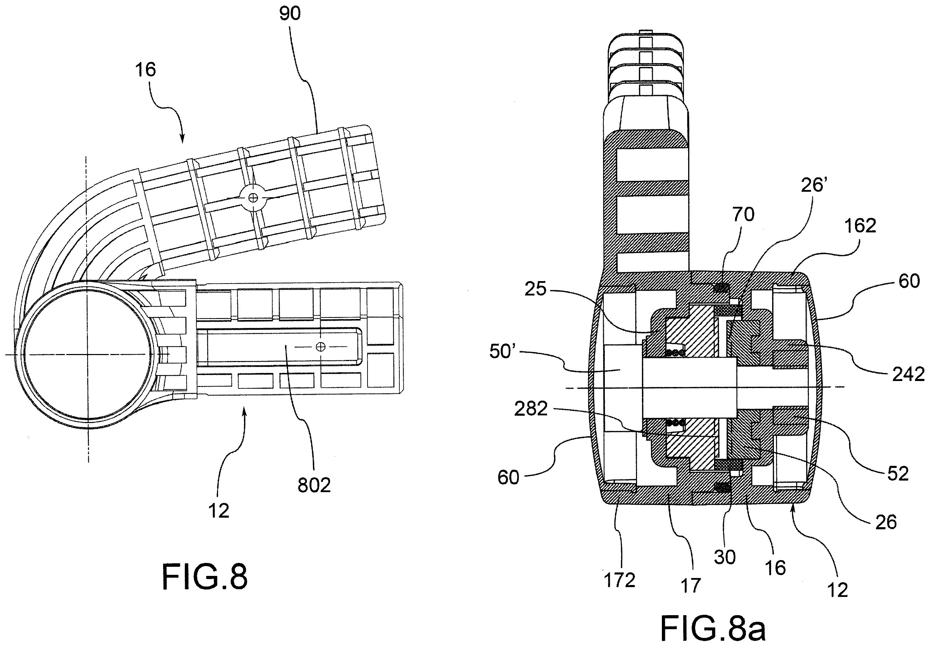

When instead the sun lounger is to be folded for storage after use, from the vertical end stroke position it is possible to push the backrest further forward so that the radial teeth 284 of the mobile ring nut 28 pass from the first grooves 304 to the second grooves 306 on the edge of the spacer ring 30. The mobile ring nut is thus disengaged from both the fixed crown gear and the spacer ring. The backrest can be then moved into a forward folding position onto the main frame 4 (figures 8, 8a, 11).

To bring the backrest from this position back to the reset position of the adjustment mechanism, it is sufficient to rotate the backrest backwards. The mobile ring nut 28 rotates on the spacer ring 30 as far as the vertical end stroke position, from here it begins to engage the second grooves 304 of the spacer ring, dragging the latter in rotation until it reaches the horizontal end stroke position in which the first grooves 304 of the spacer ring and therefore also the fixed crown gear 26, engage.

Consequently the interaction between the mobile ring nut and the spacer ring, made possible by the elastic ring nut stressing means, enables the adjustment mechanism to implement three operating stages: adjustment and blocking of the position of the backrest, free rotation of the backrest in the horizontal end stroke position for rearming of the adjustment mechanism, free rotation of the backrest from the vertical end stroke position to a position of folding back onto the main frame.

All this can be achieved with a particularly compact joint, of small dimensions and particularly suitable for use in harsh environments, such as on beaches, thanks to the protection from the effects of water, salt, dust, etc.

A person skilled in the art may make modifications and variations to the embodiments of the joint and of the sun lounger according to the invention, replacing elements with others functionally equivalent so as to satisfy contingent requirements while remaining within the sphere of protection of the following claims. Each of the characteristics described as belonging to a possible embodiment may be realised independently of the other embodiments described.

## Claims

1. Connection joint for adjusting the inclination between a first frame (4) and a second frame (5) of a structure, such as a sun lounger, comprising:
- a fixed half-joint (12), suitable to be attached to the first frame (4) of the sun lounger,
- a mobile half-joint (14), suitable to be connected to the second frame (5) of the sun lounger,
where such fixed and mobile half-joints have respective mutual coupling portions (16, 17) around which jointly delimit a joint seat (18) in which an adjustment mechanism (20) of the angular position of the mobile half-joint in relation to the fixed half-joint is housed, said half-joint adjustment mechanism comprising:
- a fixed crown gear (26), integral with the coupling portion (16) of the fixed half-joint,
- a mobile ring nut (28), integral in rotation with the mobile half-joint (14), said mobile ring nut being provided with an annular counter-gear (282) suitable to engage in the fixed crown gear (26) to identify a plurality of angular coupling positions between said mobile ring nut and said fixed crown gear,
- a spacer ring (30) positioned around the fixed crown gear, said spacer ring having a cam profile (302) which the mobile ring nut (28)engages on , in said cam profile a first engagement portion with the mobile ring nut being made, wherein mobile ring nut snap engages the fixed crown gear in steps and drags the spacer ring in rotation around the fixed crown ring, a second engagement portion with the mobile ring nut, wherein the mobile ring nut is disengaged from the fixed crown gear and drags the spacer ring in rotation around the fixed crown gear, and a third engagement portion with the mobile ring nut, wherein the mobile ring nut is disengaged from the fixed crown gear and is free to rotate in relation to the spacer ring, the spacer ring and the fixed half-joint being fitted with stop means (310, 40) to block the rotation of the spacer ring (30) in at least one end-stroke position of the second frame (5), so as to allow the passage of the mobile ring nut (28) from the engagement position with the first portion to the engagement position at least with the second engagement portion with the spacer ring,
- elastic ring-nut stressing means (32), said elastic means acting axially on the mobile ring nut in the direction of engagement with the fixed crown gear (26) and being suitable to allow a controlled reversing of the mobile ring nut for the stepped rotation on the fixed crown gear and for the passage of the mobile ring nut from the first to the second and from the second to the third engagement position with the spacer ring.

2. Joint according to the previous claim, comprising sealing means (60, 70) suitable to prevent the entry of external agents such as water and salt, in the joint seat (18) .

3. Joint according to claim 1 or 2, wherein said first engagement portion is defined by at least one first throat (304) made in the lateral surface of the spacer ring (30), wherein said second engagement portion is defined by at least a second throat (306) made in said lateral surface of the spacer ring, said first throat having a greater depth than said second throat, and wherein the mobile ring nut (28) has at least one radial tooth (284) which extends from the lateral surface of the ring nut and is suitable to fit into said first and second throat.

4. Joint according to any of the previous claims, wherein said third engagement portion is defined by at least one circular portion (308) of the edge of the spacer ring facing the mobile ring nut.

5. Joint according to any one of the previous claims, wherein from the inner surface of the joint seat at least one radial retaining tooth (40), extends and wherein in the edge of the spacer ring opposite the mobile ring nut at least two end-stop steps (310) are made suitable to abut against said retaining tooth (40).

6. Joint according to any of the previous claims, wherein the coupling portion of the mobile half-joint and the mobile ring nut mobile have counter-shaped lateral contact surfaces.

7. Joint according to any of the previous claims, wherein said that elastic ring-nut stressing means comprise a coil spring placed between the mobile ring nut and a back wall of the joint seat.

8. Joint according to any of the previous claims, wherein the two half-joints are connected to each other by a screw (50) which axially engages the two coupling portions.

9. Joint according to any of the claims from 2-8, wherein said sealing means comprise an annular gasket (70) interposed between the coupling portions (16, 17).

10. Joint according to any of the previous claims, wherein each coupling portion (16, 17) has a lateral wall (162, 172) to which a protective cap (60) is sealingly applied.

11. Joint according to any of the previous claims, wherein the fixed half-joint and the mobile half-joint are fitted with respective insertion portions (80, 90) suitable to be inserted and secured in a profiled element (84) of the first frame and in a profiled element (94) of the second frame, respectively.

12. Sun lounger, deckchair or the like, comprising a main frame (4), a frame of the backrest (5), and a pair of joints (10) according to any of the previous claims which connect said main frame to said backrest frame.

13. Sun lounger, deckchair or the like, according to the previous claim, wherein the main frame comprises, for the connection to each joint, a profiled element (84) in which an insertion portion (80) of the joint is inserted with a shaped coupling, in the upper part of the lateral wall of said profiled element a longitudinal groove (86) suitable to receive a support bar of a canvas being made.

14. Sun lounger, deckchair or the like, according to the previous claim, wherein said longitudinal throat is connected to a back wall of the profiled element by means of an inner septum (89) which divides the inner cavity of the profiled element into two cavity parts, and wherein the insertion portion of the fixed half-joint comprises a main insertion portion (802), inserted with a shaped coupling in one of said cavity parts, and a stiffening portion (804) which extends from the coupling portion and which is inserted in the other of said cavity parts, said stiffening portion being parallel to and separate from said main insertion portion.

## Patentansprüche

1. Verbindungsgelenk zum Einstellen der Neigung zwischen einem ersten Rahmen (4) und einem zweiten Rahmen (5) einer Struktur, wie zum Beispiel eine Sonnenliege, umfassend:
- ein fixiertes Halbgelenk (12), welches dazu geeignet ist, an dem ersten Rahmen (4) der Sonnenliege angebracht zu sein,
- ein bewegliches Halbgelenk (14), welches dazu geeignet ist, mit dem zweiten Rahmen (5) der Sonnenliege verbunden zu sein,
wobei ein derartiges fixiertes und ein derartiges bewegliches Halbgelenk ringsum entsprechende gegenseitige Kopplungsabschnitte (16, 17) aufweisen, welche gemeinsam einen Gelenksitz (18) begrenzen, in welchem ein Einstellmechanismus (20) der Winkelposition des beweglichen Halbgelenks in Bezug auf das fixierte Halbgelenk aufgenommen ist, wobei der Halbgelenk-Einstellmechanismus umfasst:
- einen fixierten Zahnkranz (26), welcher integral mit dem Kopplungsabschnitt (16) des fixierten Halbgelenks ausgebildet ist,
- eine bewegliche Ringmutter (28), welche drehfest mit dem beweglichen Halbgelenk (14) ausgebildet ist, wobei die bewegliche Ringmutter mit einem ringförmigen Gegenrad (282) bereitgestellt ist, welches dazu geeignet ist, in den fixierten Zahnkranz (26) einzugreifen, um eine Mehrzahl winkliger Kopplungspositionen zwischen der beweglichen Ringmutter und dem fixierten Zahnkranz zu bestimmen,
- einen Distanzring (30), welcher um den fixierten Zahnkranz herum positioniert ist, wobei der Distanzring ein Nockenprofil (302) aufweist, an welchem die bewegliche Ringmutter (28) eingreift, wobei in dem Nockenprofil ein erster Eingriffsabschnitt mit der beweglichen Ringmutter, wobei die bewegliche Ringmutter den fixierten Zahnkranz stufenweise in Schnappeingriff nimmt und den Distanzring in eine Drehung um den fixierten Zahnkranz herum zieht, ein zweiter Eingriffsabschnitt mit der beweglichen Ringmutter, wobei die bewegliche Ringmutter von dem fixierten Zahnkranz gelöst ist und den Distanzring in eine Drehung um den fixierten Zahnkranz herum zieht, und ein dritter Eingriffsabschnitt mit der beweglichen Ringmutter gebildet ist, wobei die bewegliche Ringmutter von dem fixierten Zahnkranz gelöst ist und sich in Bezug auf den Distanzring frei drehen kann, wobei der Distanzring und das fixierte Halbgelenk mit Anschlagmitteln (310, 40) ausgestattet sind, um die Drehung des Distanzrings (30) in wenigstens einer Endhubposition des zweiten Rahmens (5) zu blockieren, um den Übergang der beweglichen Ringmutter (28) von der Eingriffsposition mit dem ersten Abschnitt zu der Eingriffsposition wenigstens mit dem zweiten Eingriffsabschnitt mit dem Distanzring zu ermöglichen,
- elastische Ringmutter-Spannmittel (32), wobei die elastischen Mittel in der Richtung eines Eingriffs mit dem fixierten Zahnkranz (26) axial auf die bewegliche Ringmutter wirken und dazu geeignet sind, eine kontrollierte Umkehrung der beweglichen Ringmutter für die gestufte Drehung an dem fixierten Zahnkranz und für den Übergang der beweglichen Ringmutter von der ersten zu der zweiten und von der zweiten zu der dritten Eingriffsposition mit dem Distanzring zu ermöglichen.

2. Gelenk nach dem vorhergehenden Anspruch, umfassend Dichtungsmittel (60, 70), welche dazu geeignet sind, den Eintritt äußerer Mittel, wie zum Beispiel Wasser und Salz, in den Gelenksitz (18) zu verhindern.

3. Gelenk nach Anspruch 1 oder 2, wobei der erste Eingriffsabschnitt durch wenigstens eine erste Einschnürung (304) definiert ist, welche in der lateralen Fläche des Distanzrings (30) gebildet ist, wobei der zweite Eingriffsabschnitt durch wenigstens eine zweite Einschnürung (306) definiert ist, welche in der lateralen Fläche des Distanzrings gebildet ist, wobei die erste Einschnürung eine größere Tiefe aufweist als die zweite Einschnürung, und wobei die bewegliche Ringmutter (28) wenigstens einen radialen Zahn (284) aufweist, welcher sich von der lateralen Fläche der Ringmutter erstreckt und dazu geeignet ist, in die erste und die zweite Einschnürung zu passen.

4. Gelenk nach einem der vorhergehenden Ansprüche, wobei der dritte Eingriffsabschnitt durch wenigstens einen kreisförmigen Abschnitt (308) des Rands des Distanzrings definiert ist, welcher der beweglichen Ringmutter zugewandt ist.

5. Gelenk nach einem der vorhergehenden Ansprüche, wobei sich von der inneren Fläche des Gelenksitzes wenigstens ein radialer Haltezahn (40) erstreckt und wobei in dem Rand des Distanzrings gegenüberliegend der beweglichen Ringmutter wenigstens zwei Endanschlagsstufen (310) gebildet sind, welche dazu geeignet sind, an dem Haltezahn (40) anzuliegen.

6. Gelenk nach einem der vorhergehenden Ansprüche, wobei der Kopplungsabschnitt des beweglichen Halbgelenks und der beweglichen Ringmutter gegengeformte laterale Kontaktflächen aufweisen.

7. Gelenk nach einem der vorhergehenden Ansprüche, wobei die elastischen Ringmutter-Spannmittel eine Spiralfeder umfassen, welche zwischen der beweglichen Ringmutter und einer Rückwand des Gelenksitzes platziert ist.

8. Gelenk nach einem der vorhergehenden Ansprüche, wobei die zwei Halbgelenke durch eine Schraube (50) miteinander verbunden sind, welche die zwei Kopplungsabschnitte axial in Eingriff nimmt.

9. Gelenk nach einem der Ansprüche 2-8, wobei die Dichtungsmittel eine ringförmige Dichtung (70) umfassen, welche zwischen den Kopplungsabschnitten (16, 17) eingefügt ist.

10. Gelenk nach einem der vorhergehenden Ansprüche, wobei jeder Kopplungsabschnitt (16, 17) eine laterale Wand (162, 172) aufweist, an welcher eine Schutzkappe (60) abdichtend angebracht ist.

11. Gelenk nach einem der vorhergehenden Ansprüche, wobei das fixierte Halbgelenk und das bewegliche Halbgelenk mit entsprechenden Einsatzabschnitten (80, 90) ausgestattet sind, welche dazu geeignet sind, in einem Profilelement (84) des ersten Rahmens bzw. in einem Profilelement (94) des zweiten Rahmens eingesetzt und gesichert zu sein.

12. Sonnenliege, Liegestuhl oder dergleichen, umfassend einen Hauptrahmen (4), einen Rahmen der Rückenlehne (5) und ein Paar von Gelenken (10) nach einem der vorhergehenden Ansprüche, welche den Hauptrahmen mit dem Rückenlehnenrahmen verbinden.

13. Sonnenliege, Liegestuhl oder dergleichen, nach dem vorhergehenden Anspruch, wobei der Hauptrahmen für die Verbindung mit jedem Gelenk ein Profilelement (84) umfasst, in welchem ein Einsatzabschnitt (80) des Gelenks mit einer Formkopplung eingesetzt ist, wobei in dem oberen Teil der lateralen Wand des Profilelements eine longitudinale Nut (86) gebildet ist, welche dazu geeignet ist, eine Halterungsstange eines Segels aufzunehmen.

14. Sonnenliege, Liegestuhl oder dergleichen, nach dem vorhergehenden Anspruch, wobei die longitudinale Einschnürung mittels einer inneren Trennwand (89), welche den inneren Hohlraum des Profilelements in zwei Hohlraumteile teilt, mit einer Rückwand des Profilelements verbunden ist und wobei der Einsatzabschnitt des fixierten Halbgelenks einen Haupteinsatzabschnitt (802), welcher mit einer Formkopplung in einen der Hohlraumteile eingesetzt ist, und einen Versteifungsabschnitt (804) umfasst, welcher sich von dem Kopplungsabschnitt erstreckt und welcher in den anderen der Hohlraumteile eingesetzt ist, wobei der Versteifungsabschnitt parallel zu und separat von dem Haupteinsatzabschnitt ist.

## Revendications

1. Elément de raccordement pour ajuster l'inclinaison entre un premier cadre (4) et un deuxième cadre (5) d'une structure telle qu'une chaise longue, comprenant
- un demi-élément fixe (12) adapté pour être attaché au premier cadre (4) de la chaise longue,
- un demi-élément mobile (14) adapté pour être attaché au deuxième cadre (5) de la chaise longue,
où de tels demi-éléments fixe et mobile comprennent des parties respectives (16, 17) de raccordement l'un à l'autre qui délimitent ensemble un siège commun (18) dans lequel un mécanisme d'ajustement (20) de la position angulaire du demi-élément mobile par rapport au demi-élément fixe est logé, ledit mécanisme d'ajustement du demi-élément comprenant
- une couronne dentée fixe (26) solidaire avec la partie de raccordement (16) du demi-élément fixe,
- une bague de serrage mobile (28) solidaire en rotation avec le demi-élément mobile (14), la bague de serrage mobile étant pourvue d'une contre-denture annulaire (282) adaptée pour engrener avec la couronne dentée fixe (26) pour identifier une pluralité de positions de raccordement angulaires entre la bague de serrage mobile et la couronne dentée fixe,
- une bague d'espacement (30) disposée autour de la couronne dentée fixe, la bague d'espacement ayant un profil de came (302) dans lequel s'engage la bague de serrage mobile (28), dans le profil de came étant réalisée une première partie d'engagement avec la bague de serrage mobile, dans laquelle la bague de serrage mobile s'engage par encliquetage par pas dans la couronne dentée fixe et entraîne la bague de serrage en rotation autour de la couronne dentée fixe, une deuxième partie d'engagement avec la bague de serrage, dans laquelle la bague de serrage est désengagée de la couronne dentée fixe et entraîne la bague de serrage en rotation autour de la couronne dentée fixe, et une troisième partie d'engagement avec la bague de serrage, dans laquelle la bague de serrage est désengagée de la couronne dentée fixe et est libre de tourner par rapport à la bague d'espacement, la bague d'espacement et le demi-élément fixe étant pourvus de moyens d'arrêt (310, 40) pour bloquer la rotation de la bague d'espacement (30) dans au moins une position de fin de course du deuxième cadre (5), afin de rendre possible le passage de la bague de serrage mobile (28) de la position d'engagement avec la première partie à la position d'engagement avec au moins la deuxième partie d'engagement avec la bague d'espacement,
- des moyens élastiques (32) pour solliciter la bague de serrage, les moyens élastiques agissant axialement sur la bague de serrage mobile dans la direction d'engagement avec la couronne dentée fixe (26) et étant adaptés pour rendre possible une réversion commandée de la bague de serrage mobile pour une rotation par pas sur la couronne dentée et pour la passage de la bague de serrage mobile de la première à la deuxième et de la deuxième à la troisième position d'engagement avec la bague d'espacement.

2. Elément selon la revendication précédente, comprenant des moyens d'étanchéité (60, 70) adaptés pour empêcher l'entrée d'agents extérieurs tels que de l'eau et du sel dans le siège (18) de l'élément de raccordement.

3. Elément selon la revendication 1 ou 2, **caractérisé en ce que** la première partie d'engagement est définie par au moins une première gorge ou entaille (304) réalisée dans la surface latérale de la bague d'espacement (30), **en ce que** la deuxième partie d'engagement est définie par au moins une deuxième gorge ou entaille (306) réalisée dans la surface latérale de la bague d'espacement, la première entaille ayant une profondeur plus grande que la deuxième entaille, et **en ce que** la bague de serrage mobile (28) comporte au moins une dent radiale (284) qui s'étend à partir de la surface latérale de la bague de serrage et est adaptée pour entrer dans la première et la deuxième entaille.

4. Elément selon l'une des revendications précédentes, **caractérisé en ce que** la troisième partie d'engagement est définie par au moins une partie circulaire (308) du bord de la bague d'espacement en regard de la bague de serrage mobile.

5. Elément selon l'une des revendications précédentes, **caractérisé en ce que**, à partir de la surface intérieure du siège de l'élément de raccordement, au moins une dent radiale de rétention (40) s'étend et **en ce que** dans le bord de la bague d'espacement qui est opposé à la bague de serrage mobile, au moins deux étages de buté (310) sont agencés pour buter contre la dent de rétention (40).

6. Elément selon l'une des revendications précédentes, **caractérisé en ce que** la partie de raccordement du demi-élément mobile et la bague de serrage mobile ont des surfaces de contact de formes complémentaires.

7. Elément selon l'une des revendications précédentes, **caractérisé en ce que** les moyens élastiques pour solliciter la bague de serrage comprennent un ressort hélicoïdal placé entre la bague de serrage mobile et une paroi arrière du siège de l'élément de raccordement.

8. Elément selon l'une des revendications précédentes, **caractérisé en ce que** les deux demi-éléments sont attachés l'un à l'autre par une vis (50) qui traverse les deux parties de raccordement axialement.

9. Elément selon l'une des revendications 2 à 8, **caractérisé en ce que** les moyens d'étanchéité comprennent un joint annulaire (70) interposé entre les parties de raccordement (16, 17).

10. Elément selon l'une des revendications précédentes, **caractérisé en ce que** chaque partie de raccordement (16, 17) comporte une paroi latérale (162, 172) sur laquelle est appliqué, de manière étanche, un capuchon de protection (60).

11. Elément selon l'une des revendications précédentes, **caractérisé en ce que** le demi-élément fixe et le demi-élément mobile sont pourvus de parties d'insertion respectives (80, 90) adaptées pour être insérées et sécurisées respectivement dans un élément profilé (84) du premier cadre et dans un élément profilé (94) du deuxième cadre.

12. Chaise longue, transat ou semblable, comprenant un cadre principal (4), un cadre de dossier (5) et une paire d'éléments de raccordement (10) selon l'une des revendications précédentes, qui connectent le cadre principal au cadre de dossier.

13. Chaise longue, transat ou semblable selon la revendication précédente, **caractérisé en ce que** le cadre principal comprend, pour le raccordement à chaque élément de raccordement, un élément profilé (84) dans lequel une partie d'insertion (80) de l'élément de raccordement est inséré avec un accouplement de forme, dans la partie supérieure de la paroi latérale de l'élément profilé, une rainure longitudinale (86) adaptée pour recevoir une barre de support pour une toile, étant réalisée.

14. Chaise longue, transat ou semblable selon la revendication précédente, **caractérisé en ce que** la rainure longitudinale est attachée à une paroi arrière de l'élément profilé par une cloison intérieure (89) qui divise la cavité intérieure de l'élément profilé en deux parties de cavité, et **en ce que** la partie d'insertion du demi-élément fixe comprend une partie principale d'insertion (802), insérée avec un attachement de forme dans une des parties de cavité, et une partie de renforcement (804) qui s'étend à partir de la partie de raccordement et qui est insérée dans l'autre des parties de cavité, la partie de renforcement étant parallèle à et séparée de la partie principale d'insertion.
